# EUROPEAN PATENT APPLICATION

(11) **EP 4 733 056 A1**
(43) Date of publication of application: **29.04.2026**
(21) Application number: 24208216.2
(22) Date of filing: 22.10.2024
(51) Int. Cl.: B32B 1/00, B32B 5/02, B32B 5/24, B32B 5/26, B32B 7/12, B32B 27/06

(54) **AUTOMOTIVE ENCAPSULATING TRIM PART**

(71) Applicant: Autoneum Management AG, 8406 Winterthur (CH)
(72) Inventor: Epinat, Chloé, 8037 Zurich (CH); Arasimowicz-Andres, Monika, 8050 Zürich (CH); Lafont, Thibault, Therwil (CH)

(57) **Abstract**

An encapsulating trim part comprising a moulded multilayer structure with at least a fibrous noise attenuating layer, a binding layer and a structural layer, whereby the binding layer is sandwiched between the noise attenuating layer and the structural layer, whereby the encapsulating trim part is obtainable by the process of moulding the fibrous noise attenuating layer and the binding layer both at ambient temperature together with the structural layer heated, and whereby the residual heat of the heated structural layer is enough to melt the binding layer such that the binding layer binds to fibers on the surface of the attenuating layer without further binding the fibers within the attenuating layer.

## Description

### Technical Field

The present invention relates to an encapsulating trim part and a method for producing such a part.

### Background

There are many sources of noise in a vehicle such as noise from motors, power trains, HVAC, tire noise, brake noise, suspension, and wind noise, both for electric and combustion engine driven vehicles. The noise generated by these different sources enters the vehicle's passenger compartment and may cover a rather wide frequency range. Noises from inside the engine compartment such as powertrain noises are known to be most effectively treated as close to the noise source as possible. Therefore, both battery electric and combustion engine vehicles have encapsulation type parts on engines, electric motors, AC compressors, HVAC units, etc. which are located within the vehicle.

One option of treating noise from noise sources is encapsulating the source with one or more layers of materials. For instance, by wrapping a carrier layer around the source and filling the cavity between the noise source and the carrier with foam. Foam in the form of injected polyurethane foam has the advantage that it fills the full cavity leaving no gaps or channels for noise to escape. However, the use of foam is under increasing scrutiny due to recycling and sustainability regulations. Hence there is a need for alternative materials.

Encapsulating trim part may also be made with a carrier layer and a fibrous layer moulded together, both layers contain a binder which maintain the moulded shape after moulding. Moulding is done in a thermal process with a heated mould and or preheated layers before a cold moulding step. The layers are moulded into three-dimensional shapes to follow the shape of the noise source when installed in the vehicle. The three-dimensional shape of the acoustic part may be very strong, i.e. deep draw and/ or high complexity, and the thickness of encapsulating acoustic parts may vary from a few millimetres up to about 50 millimetres.

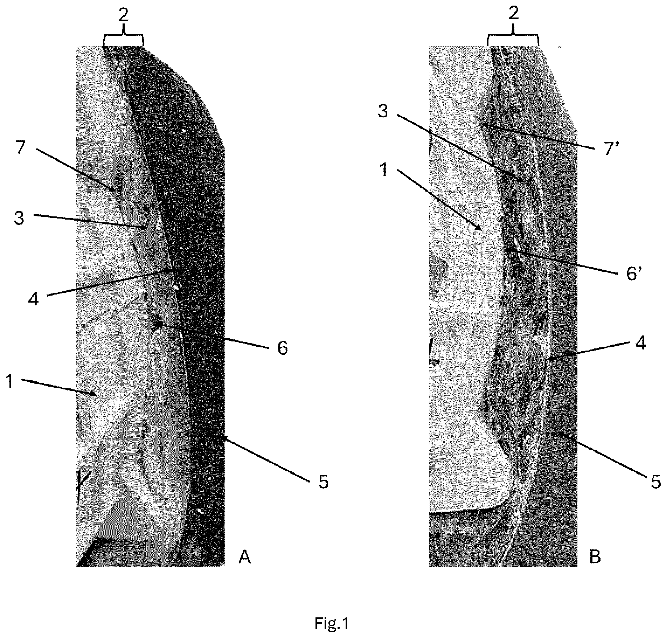

However, the thus formed encapsulating parts upon wrapping around the noise source, are prone to a number of common flaws. One problem is that during installation of the encapsulating trim part on the noise source, false fold lines may occur in regions where a fold line is not wanted (see figure 1A, reference 5). These false fold lines are in principle forming channels that enable noise to find a direct path out of the encapsulation, hence limiting the noise attenuation. Another problem is that due to the thermal moulding process, the surface of the fibrous layer is partly plasticised and starts pulling on the surface when bent around the noise source, preventing the material from following the surface of the noise source more precisely, creating additional gaps and/or pathways. This is especially pronounced in smaller parts with high part complexity where a felt material simply cannot follow the outline contours, thereby limiting the effectiveness as a noise reducing part.

Thermoplastic felts used in fibrous noise attenuating layers can achieve a very low density and be soft and formable in their semi-finished state. These characteristics are not maintained once the part is moulded. Due to heating, binding and resulting cooling of the fibrous material, the fibrous layer thus obtained, forms at least a stiffened skin layer or even a stiffer overall structure.

A moulded thermoplastic felt, like the one used in state-of-the-art encapsulating trim parts, can have a compressional force of 3 kPa at a density of 70 kg/m³, but values above 5 kPa are not uncommon for a felt within the density range used. With compressional stiffnesses in this range or higher, it is difficult for a felt to closely follow the contours of an acoustic noise source. Furthermore, forcing the moulded fibrous material with a stiffness in this range against a noise source with pressure, either by fixations or through the structural carrier layer, will generally only compress the fibrous noise attenuating layer further, limiting the absorbing potential of the acoustic part in addition without solving any false folds or gaps formed.

It is therefore the object of the current invention to present an encapsulating trim part for encapsulating noise sources in particularly in a passenger vehicle, light commercial vehicle or a truck comprising a fibrous noise attenuating layer, able to encapsulate a noise source eliminating the problems of the prior art, in particular eliminating false fold lines and reducing gap forming between the noise source and the fibrous noise attenuating layer.

### Summary of Invention

The object of the invention is achieved by an encapsulating trim part comprising a moulded multilayer structure comprising at least a fibrous noise attenuating layer, a binding layer and a fibrous structural layer, whereby the binding layer is sandwiched between the noise attenuating layer and the structural layer according to main claim 1.

The encapsulating trim part according to the invention is obtainable by the process of moulding the fibrous noise attenuating layer, and the binding layer, both at ambient temperature, together with a tempered structural layer, whereby the residual heat of the structural layer at elevated temperature is enough to melt the binding layer such that the binding layer binds to fibers on the surface of the attenuating layer, without further binding the fibers in the bulk of the attenuating layer.

Surprisingly, the encapsulating trim part thus obtained comprises a fibrous noise attenuating layer that is not further bound or plasticised within the fibrous material, while it is strongly bound surface to surface to the moulded structural layer. It is solely the structural layer that is formed in the final shape necessary to encapsulate the noise source, while the fibrous layer is only bound and follows the surface of the structural layer but is not moulded into a set shape. This enables the fibrous layer to move more freely in all directions thereby better filling the space between the structural layer and the surface of the noise source, without forming unwanted false folds. In addition, as the material of the fibrous noise attenuating layer is not further changed during the moulding it substantially maintains its rebound and will maintain spring back within the cavity, this has the advantage that less material is needed to fully fill the gap between the noise source and the structural layer. Hence also less material needs to be compressed in the areas where the distance between the structural layer and the noise source surface is minimal.

Hence, the encapsulating trim part obtained by the process as claimed is able to obtain a more favourable fibrous noise attenuating layer able to bounce back into its final shape without being restrained by plasticising, and therefore able to fill the cavity between the noise source and the structural layer more evenly.

Ambient temperature in the meaning of the current disclosure is defined as the state of the material without any necessity of a thermal -heating or cooling- step.

The encapsulating trim part according to the invention may comprise a single part, or multiple parts combined to cover a noise source. The single or multiple part together may cover the noise source at least partially or preferable fully. The amount of coverage and/ or the number of parts needed is dependent on the shape and size of the noise source, and/ or the means for mounting the noise source in the vehicle, and/ or the available space around the noise source and/ or the accessibility of the surface of the noise source.

Parts in contact with neighbouring parts, or meeting ends of a wrapped part may be bound together by any means of releasable or fixed mounting, preferably by clips, glue, buckles or hook and loop type binding.

Preferably multiple parts connected, or meeting ends of a wrapped part, may be created in an overlapping design, whereby one of the overlapping structures comprises the structural layer but not the fibrous layer and the counterpart, comprises all layers.

Although the fibrous noise attenuating layer may be used also in areas with less space available it may be necessary, or economical to create an area with only the structural layer.

From an acoustic noise attenuation perspective, full coverage of the noise source is desirable. Preferably the entire noise source is encapsulated. However, pipes, tubes, fixating points and mountings, wires and or cables connecting to the noise source may limit or prevent entire encapsulation. A partial encapsulation using the encapsulating trim part according to the invention attenuating noise at least on main areas may be used. Areas without packaging space may comprise the structural layer only to be able to wrap and fasten around a part of the noise source, for instance in the form of a flap or strap.

A noise source may be any part of a car subjected to active or passive actions is generating and or transmitting noise, in particularly engines, both internal combustion and electric engines, as well as drive trains, gear boxes, compressors, pumps, pillars, structural panels or piping. The noise source may comprise protruding features (example include sensors, mountings, connectors, ribs, fins, tubes, pipes, cabling, etc.), whereby the engine encapsulation may go over these features and they are embedded within the fibrous noise attenuating layer.

The structural layer may be pre-shaped in an additional process step but preferably, the structural layer material is formed in its final shape during the moulding process, whereby the moulding process is done in a moulding tool with a moulding gap in its closed stage, that is substantially the final shape and thickness of the structural layer in the encapsulating trim part. The advantage of the preferred solution is that the heat of the structural layer is enough to not only form the structural layer, but residual heat is also available to melt the binding layer so all layers can be laminated together according to the invention.

Surprisingly, the fibrous attenuating layer may be compressed fully to aid in binding the surface of the fibrous layer to the molten binding layer and compressing the structural layer in its final form without substantial change in the fibrous layer, in particular, no further binding is induced within the fibrous material itself. The fibrous layer substantially maintains its ability to bounce back to almost its initial thickness after moulding. It is this rebound that is beneficial for the encapsulation of the noise source.

Preferably, the fibrous noise attenuating layer in the encapsulating trim part, maintains its rebound in thickness, and can follow the surface contours of the structural layer to which the fibrous noise attenuating layer is bound. Upon mounting, the fibrous noise attenuating layer can adapt to the space between the structural layer and the noise source both, in in-plane and out-of-plane direction.

The fibrous noise attenuating layer in the moulded trim part according to the invention maintains the low resilience of the semifinished fibrous material, such that the required pressure to compress the absorber to 40% (CV40) of its original thickness is below 1 kPa, preferably below 500 Pa. The forces measured to a compression of 40% on the first compression cycle in accordance with ISO 3386-1.

The density of the fibrous noise attenuating layer is below 100 kg/m³, preferably below 70 kg/m³ after moulding prior to part installation.

Surprisingly, the unusually low resilience maintained substantially in the fibrous noise attenuating layer after moulding allows the encapsulating trim part to conform around the individual contours of the acoustic noise source at a local level, thus providing excellent encapsulation and acoustic attenuation performance.

For example, a fibrous noise attenuating layer may have an area weight of 800 g/m² and a starting thickness of 40 mm before moulding, it maintains its rebound according to the invention, if it is able to rebound to at least 75% of its original thickness, or for instance in our example to 30 mm, maintaining the lofty spring back and low resilience characteristics of the original felt material. Some of the rebound may be lost due to binding of the surface fibres of the fibrous noise attenuating layer to the binding layer.

An encapsulating trim part according to one of the preceding claims whereby the fibrous noise attenuating layer comprises staple fibers and binder.

The staple fibers may be solid, or hollow fibers. Preferably self-crimped staple fibers are used, as they enhance the rebound, these can be solid or hollow and used alone or in combination with solid or hollow fibers.

Self-crimped staple fibres are fibres with two sides, arranged such that one side shrinks differently from the other side and thereby induced a shaping of the filament away from the straight line, for instance in the form of spiral, omega or helical.

Self-crimped fibers differ from mechanically crimped fibers in a way that they obtain the crimping capacity during the spinning of the fiber as an intrinsic feature of the fiber. This intrinsic self-crimp is maintained during further production process steps or later use of the material, hence the crimp in self-crimped fibers is permanent.

The self-crimped fiber is preferably a side-by-side conjugate fiber. Preferably the conjugate material is chosen such that there is a difference in viscosity causing an inherent self-crimping in the fibre. However other types of conjugate fibers that show a self-crimping as defined might be chosen as well.

The staple fibers are preferably thermoplastic staple fibers comprising of at least a polymer or copolymer of at least one of polyester, preferably a terephthalate-based polyester, such as polyethylene terephthalate PET or polybutylene terephthalate PTB, polyamide PA, such as polyamide 6 or polyamide 66, polyolefin, such polypropylene PP or polyethylene PE, or biopolymers such as polylactic acid PLA.

Preferably, the binder of the fibrous noise attenuating layer is applied as binder fibers. Binder fibres can be mono-material or bicomponent. In bicomponent fibers, one component is the binder while the other is adding to the staple fibres.

The binder is preferably thermoplastic comprising of at least a polymer or copolymer of at least one of polyester, preferably a terephthalate-based polyester such as polyethylene terephthalate PET or polybutylene terephthalate PTB, polyamide PA such as polyamide 6 or polyamide 66, polyolefin such polypropylene PP or polyethylene PE, or biopolymers such as polylactic acid PLA.

Preferably, the fibrous noise attenuating layer comprises between 5 and 30% by weight of the layer binder, and between 70 and 95% by weight of the layer staple fibres.

Preferably, the fibrous noise attenuating layer consists of binder and staple fibers.

Preferably, prior to moulding the fibrous noise attenuating layer has been at least partially pre-bonded in a previous processing step. This may be done either by mechanical intermingling of the fibers in a needling step, or preferably, by pre-bonding the binder components within the fibrous noise attenuating layer in a thermal process without excessive compression of the fibrous noise attenuating layer.

A preferred process for pre-bonding the fibrous noise attenuating layer is heating in a hot air oven, where the lofty structure can be maintained without excessive compression and bonding between staple fibers and binders can be achieved. A higher compression would lead to further bonding between staple fibers and binders, which would limit the rebound and increase the stiffness of the fibrous noise attenuating layer, both of which are undesirable as it would limit the ability of the fibrous noise attenuating layer to follow the contours of a noise source.

The step of pre-bonding the fibrous noise attenuating layer is desirable before moulding as this will ensure the fibrous material can be transported and handled prior to moulding without tearing or loss of fibers. Pre-bonding the fibrous noise attenuating layer is also desirable after moulding, as this will prevent any fibers from fraying and or fiber loss from the part edges.

The fibrous noise attenuating layer may comprise staple fibre lengths between 25 and 100 mm, preferably between 32 and 76 mm.

By the process of moulding the fibrous noise attenuating layer and the binding layer both at ambient temperature together with the preheated structural layer, and whereby the residual heat of the heated structural layer is enough to melt the binding layer such that the binding layer binds to fibers on the surface of the attenuating layer without further binding the fibers within the attenuating layer, the fibrous noise attenuating layer is preferably minimally increased in density. The density of the fibrous noise attenuating layer increases less than 30%, preferably less than 10%. It may be assumed that the increase in density is more to the fact that fibers stick into the binding layer than that the material is further bonded during the moulding step. Hence the change in thickness may not relate to an actual increase in density within the fibrous layer.

The encapsulating trim part comprises a moulded multilayer structure with at least a fibrous noise attenuating layer, a binding layer and a structural layer, whereby the binding layer is sandwiched between the noise attenuating layer and the structural layer.

The binding layer main function is to bind the fibrous noise attenuating layer to the structural layer according to the invention. The binding layer is placed at ambient temperature together with the preheated structural layer, such that the residual heat of the heated structural layer is enough to melt the binding layer,

The fibrous noise attenuating layer is also placed together with the binding layer on top of the structural layer, but as the residual heat is enough to melt the binding layer, it should not be enough to melt the binder within the fibrous noise attenuating layer. Directly after laying the ambient temperature layers together with the preheated structural layer the mould is closed, the heated structural layer is formed, and the residual heat is used to melt the binding layer such that the binding layer binds to fibers on the surface of the attenuating layer without further binding the fibers within the attenuating layer.

Preferably, the binding layer used is a foil, film or scrim form for ease of handling and preventing migration of the binder into areas not wanted. Furthermore, it is beneficial if the binder layer has a certain thickness to its layer, such that the fibers of the attenuating layer can stick to the layer and bind thereby the layer to the structural layer.

Preferably, the binding layer comprises at least one of a polymer and or copolymer selected from the group consisting of polyester, preferably a terephthalate based polyester, such as polyethylene terephthalate PET or polybutylene terephthalate PBT, or polyamide, polyolefin, or low density polyethylene LDPE or linear low density polyethylene LLDPE or high density polyethylene HDPE, polypropylene PP, thermoplastic elastomers TPEs such as thermoplastic polyolefin TPO, thromboplastic polyurethane TPU, polyetherimide, poly-sulfone, polyether sulfone, polyetheretherketone, ethylene vinyl acetate EVA, ethylene ethyl acrylate EEA or biopolymers such as polylactic acid PLA.

Preferably, a multilayer foil may be used. At least the outer layers in multilayer foil function as a binder to the adjacent layer, binding surface to surface thereby laminating the layers together. An optional middle layer may function to obtain a close construction to further optimise the acoustic attenuation. The binding layer foil adjacent to the fibrous noise absorbing layer and/ or the structural layer may function as a binding layer laminating the foil and adjacent layer together, while maintaining a core foil layer. The binding layer or layers in the foil are characterised in that their melting temperature is lower than the melting temperature of the core foil layer. Multilayer foils are advantages if the compatibility of the adjacent layers is different, and each side can comprise the best possible option for the binding. A possible example of a multilayer foil is a 3- layer foil with a polyethylene PE layer, polyamide PA layer and a polyethylene PE layer, whereby the PE layers are forming binding layers and the PA layer, maintains its integrity and forms a barrier layer in the final part.

The foil can also be referred to as a film. Any of the polymers used in the binding layer can be virgin or based on recycled materials, so long as the material requirements are fulfilled.

The foil may contain perforations to control the air flow resistance of the encapsulating trim part. Perforations and micro-perforations and their effect on acoustic performance are well described in the art (US2020086603).

The residual heat transferred to the fibrous noise attenuating layer during the moulding stage by the preheated structural layer should be enough to melt the binder and enable the binding between the fibers of the surface of the fibrous noise attenuating layer to the binder layer without deterioration of the rebound or increase of the preferred low resilience of the fibrous noise attenuating layer. Thus, softening, bonding and melting temperatures within all layers need to be matched and controlled. The optimum process may be obtained by controlling the preheating and optional compression of the structural layer during heating, as this temperature needs to be at least above the softening temperature of the binding layer or layers, but not exceeding the softening temperatures of any component of the fibrous noise attenuating layer. However, the residual heat in equipment needs to be considered, for instance the moulding tool should not warm up during continuous production of parts. It may be beneficial to include a cooling step in case the moulding tool heats up to fast. Alternatively, the fibrous noise attenuating layer and or the film layer may be stored under ambient temperature so laying them in the tool would reduce the residual tool temperature.

Preferably, the temperature of the preheated structural layer should be at least 20°C higher than the melting temperature of any binder layer materials within the binding layer.

A possible process whereby the product according to the invention may be obtained may include the steps of
- preheating and optional precompression of the structural layer material;
- stacking the preheated structural layer together with the binder layer and fibrous noise attenuating layer both at ambient temperature in a mould;
- moulding the final part, whereby residual heat of the structural layer at elevated temperature is enough to melt the binder layer, such that the surface fibers of the fibrous noise attenuating layer are pressed into the binder and the fibrous noise attenuating layer is bound surface to surface to the binder layer.

In addition, the binder layer is also binding surface to surface to the structural layer. The structural layer comprises heat activated binder that is binding at the preheating temperature such that the structural layer is moulded into a final compressed shape. After cooling of the part under the melting point of the binder of the structural layer, this layer maintains the shape given during moulding. However, the fibrous noise attenuating layer may be fully compressed during moulding, but upon release from the mould it will bounce back to substantially its initial thickness, it will be bound surface to surface to the structural layer via the binder layer and hence will follow its structure.

For certain applications, it may be desirable to have areas of the fibrous noise attenuating layer that are permanently compressed and do not or to a limited extent rebound. Preferably, this would be done in a second heat stamping process.

The fibrous noise attenuating layer may be heat stamped locally, forming a needed folding line and or to close the edge, preventing the noise attenuating layer from rebounding in these areas. Local heat stamping or heat setting of the fibrous noise attenuating layer to aid folding may help in mounting the part, especially if the gap or clearance area is limited. Alternatively, or in combination, local heat stamping of the fibrous noise attenuating layer can increase clearance or prevent surface contact between the fibrous noise attenuating layer and certain features of the noise source in areas where for example higher heat is expected, like for example exhaust lines or degassing pipes. Heat stamping can also be used to close the edge of an encapsulating trim part to further prevent fraying of the fibres within the noise attenuating layer during mounting or transportation. Furthermore, heat set edges with reduced part thickness may in some instances be desirable to achieve a smoother edge transition between an encapsulating trim part and a neighbouring part or an uncovered area of the noise source.

Only locally along the edge or where folding lines are wanted the noise attenuating layer may be compressed and set in a second heat stamping set, leaving the main areas able to rebound. The rebound and low compressional force are beneficial for an encapsulation of the trim part around or against a noise source. The higher the rebound and the lower the compressional stiffness the better the free surface of the attenuating layer is able to follow the contour of the noise source surface and to encapsulate any protruding parts within its material, thus preventing gaps and false fold lines.

An acoustic noise source may be defined as either a part directly generating the noise, such as a motor, compressor, HVAC system, or may be defined as a part transmitting or transferring noise, such as automotive body parts and structural parts that transmit wind noises or road noises from the exterior to the vehicle interior.

The structural layer is forming an outer casing or shell to further protect the noise source. The layer may give structure to the part, for ease of handling while maintaining the integrity of the soft noise attenuating layer. The structural layer may be flexible or stiff depending on the location and the complexity of the noise source to be encapsulated.

The structural layer for the encapsulating trim part according to the invention comprises preferably a thermoplastic or thermoset based layer moulded in the required shape, such that it maintains it shape enough during encapsulation of the noise source, in particularly without sagging or collapsing.

The structural layer may be heated using a method known in the art, for instance with an infrared oven, contact heater, hot air oven or another heating source, to obtain a structural layer heated to the required elevated temperature.

The structural layer may be compressed to its final thickness or close to its final thickness during the heating stage.

The heat applied to the structural layer encompasses the heat necessary to activate the binder within the layer and or makes the structural layer mouldable in its final shape during the subsequent moulding step, but also comprises a residual heat to melt the binder in the following moulding step.

Preferably the structural layer comprises a fibrous felt material. Preferably fibers and or filaments are forming the structural layer according to the invention.

The material used for the structural layer may comprise at least one of a polymer or copolymer of terephthalate-based polyester, such as polyethylene terephthalate PET or polybutylene terephthalate PBT, polyamide PA, such as polyamide 6 or polyamide 66, polyolefin, such polypropylene PP or polyethylene PE, or polylactic acid PLA,

In case of a fibrous layer, apart from the above mentioned materials, additional reinforcement fibers or filaments like carbon fibers, mineral fibers, such as glass, aramid or basalt, or natural fibers or a mixture of such fibers may be used.

A structural layer formed preferably by a least one fibrous layer may contain a thermoplastic or heat activated thermoset binder. In the case of thermoplastic binders, preferably one of a polymer or copolymer of terephthalate-based polyester, such as polyethylene terephthalate PET, polybutylene terephthalate PBT, polyamide PA, such as polyamide 6 or polyamide 66, polyolefin, such polypropylene PP or polyethylene PE, or polylactic acid PLA is used.

If a heat activated thermoset binder is to be used, preferably these are based on one of unsaturated polyester, epoxy, phenol, furan, silicone or polyurethane. Heat activated thermoset binder may be partially cured thermoset binders that fully cure on additional application of heat.

Binder may be used preferably in the form of binder fibers or as part of bicomponent fibers, whereby one component is the binder, and the other component is maintained for structural integrity of the fibrous felt material. In the case of bicomponent fibers there may be a difference in melting temperature between the components of the bicomponent fiber.

The area weight of the structural layer according to the invention is preferably between 300 g/m² and 8000 g/m², more preferably between 400 g/m² and 4000 g/m² and even more preferably between 500 g/m² and 2000 g/m².

The thickness of the structural layer according to the invention is preferably between 0.5 mm and 10 mm, more preferably between 1 mm and 7 mm and even more preferably between 1.5 mm and 5 mm. The thickness may vary throughout the part, depending on the shape necessary for the encapsulation.

Alternatively, the binder can be in the form of a matrix, completely embedding any reinforcement fibres.

The fibers of the structural layer are preferably staple fibers, with a length comprised between 25 mm and 100 mm, preferably between 32 mm and 76 mm. Staple fibers are fibers that, differently from endless filaments, come in discrete predefined lengths.

The structural layer according to the invention may preferably be porous, however, depending on the level of fiber compression, fiber blend, binder content, and temperature reached during heating phase, the felt may also lose its porosity or not be porous. Unlike the fibrous noise attenuating layer, it is not essential that the structural layer remains porous.

Any of the polymers and or materials used in any of the layers can be virgin or based on recycled or reclaimed materials, as long as the material requirements are fulfilled.

### Drawings

Figure 1 shows a cross-sections of a noise source with an encapsulating trim part, figure 1 A is the state of the art, and figure 1B is according to the invention.
Figure 2 shows a schematic cross section of an area of the encapsulating trim part where the structural layer is used for bridging.
Figure 3 show a schematic cross section of an area of the encapsulating trim part where the trim parts are connected in a preferred manor.
Figure 4 shows a cross section of an area of the encapsulating trim part with heat stamped fold lines and heat stamped edges.

Figure 1A shows a cross section of a noise source (1) covered by of a state-of-the-art encapsulating trim part (2). The encapsulating trim part (2) comprises a fibrous noise attenuating layer (3), a binding layer (4) and a structural layer (5). The binding layer (4) binds the fibrous noise attenuating layer (3) to the structural layer (5). The encapsulating trim part (2) in its mounted position is compressed against the noise source (1) causing the fibrous noise attenuating (3) layer to compress and to follow the contours of the noise source (1). However, the cross-section highlights the limited ability of state-of-the-art fibrous noise attenuating layers (3) to follow the surface contours of a noise source (1). The processing involved in state-of-the-art noise attenuating layers (3) commonly induces surface plasticisation and or further fiber bonding within the fibrous noise attenuating layer (3). This leads to higher resilience of the fibrous noise attenuating layer (3) and limits the ability of the fibrous noise attenuating layer (3) to rebound. The net effect is that the fibrous noise attenuating layer (3) cannot follow the contours of the noise source (1) as closely as desired. The higher resilience or stiffness of a fibrous noise attenuating layer (3) causes false fold lines (6) as the material is forced against a noise source (1) contours in state-of-the-art encapsulating trim parts (2). As the fibrous noise attenuating layer (3) is forced against the noise source (1), a compressive force is induced along the surface of the fibrous noise attenuating layer (3), which due to its high resilience or stiffness cannot be absorbed within the material. Therefore, the compressional force along the surface of the fibrous noise attenuating layer (3) creates folds or wrinkles, herein referred to as false fold lines (6). Essentially, these fold lines are surface buckling of the material due to a compression force on a stiff surface area. The fold line is designated as false as there is no direct contour of the noise source (1) that would cause the fibrous noise attenuating layer (3) to locally have this fold. These false fold line (6) prevent sound attenuation as the sound energy is free to pass along these false fold lines (6) and escape the encapsulating trim part (2) without any attenuation by being forced to pass into and through the noise attenuation layer (3). Simply put, false fold lines present to opportunity for noise to by-pass any attenuation. Hence, the effectiveness of encapsulating trim parts based on state-of-the-art fibrous noise attenuating layers (3) is limited due to false fold lines (6). Additionally, encapsulating trim parts (2) based on state-of-the-art fibrous noise attenuating layers (3) have a limited ability to rebound into a cavity or valley between protruding features of the noise source, leading to air gaps (7) between the surface of the noise source (1) and the state-of-the-art fibrous noise attenuating layers (3). The bonding incurred during processing in state-of-the-art fibrous noise attenuating layers (3) prevents rebound or spring-back of the fibrous material, preventing the noise attenuating layer (3) from closing the gap (7) and again leading to pathways for the noise to pass by the encapsulating trim part (2) without attenuation, thereby again limiting the performance of the encapsulating trim part (2).

Figure 1B shows a cross section of a noise source (1) covered by an encapsulating trim part (2) according to the invention. The encapsulating trim part (2) comprises a fibrous noise attenuating layer (3), a binding layer (4) and a structural layer (5). The binding layer (4) binds the fibrous noise attenuating layer (3) to the structural layer (5). The encapsulating trim part (2) in its mounted position is compressed against the noise source (1) causing the fibrous noise attenuating (3) layer to compress and follow the contours of the noise source (1). The encapsulating trim part obtained by the process according to the invention has a fibrous noise attenuating layer (3) that maintains its original softness after moulding and is therefore better able to follow the contours of the noise source (2). Furthermore, as evident from Figure 1B, the false fold lines and limited gap filling between protruding features has been reduced or completely overcome, labelled 6' and 7', respectively for demonstration reasons only. The softness prevents any false fold lines (6') of the fibrous noise attenuating layer (3). The preserved rebound of the fibrous noise attenuating layer (3) ensures fibrous material can fill deeper gaps (7') between protruding features of the noise source (1). Thus, an encapsulating trim part (2) according to the invention forces any noise emitted from an area of noise source (1) covered by a noise encapsulating trim part (2) to pass through the encapsulating trim part (2), preventing pathways for sound to bypass any attenuation attempts. It can therefore be expected that an encapsulating trim part (2) with a fibrous noise attenuating layer (3) obtained by the process according to the invention provides a better noise attenuation performance than that of existing state-of-the-art solutions.

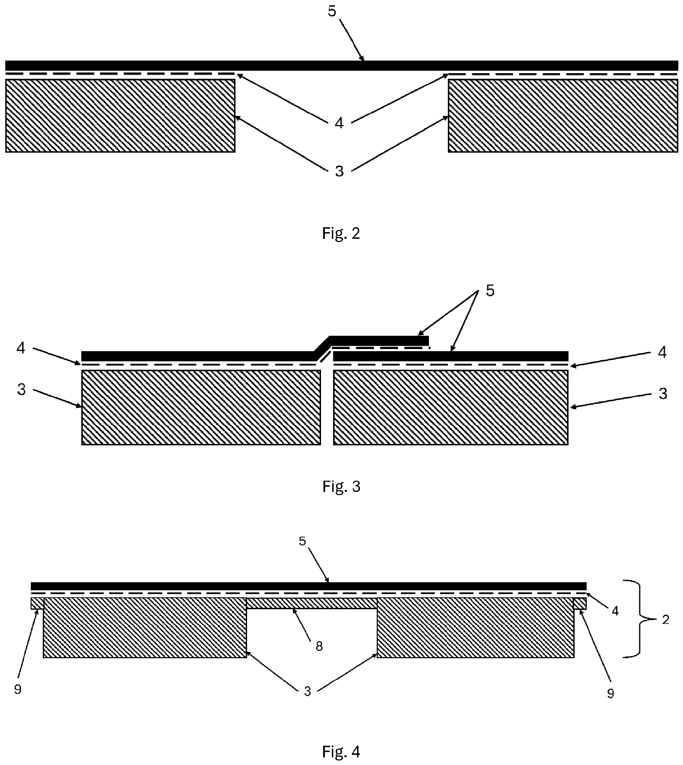

Figure 2 shows a cross section of a part of an encapsulating trim part, whereby the fibrous noise attenuating layer (3) is omitted in an area of the structural layer (5), this may be beneficial to cover areas where there is no space for an additional layer. By keeping the structural layer as a kind of bridge it might be easier to assemble the encapsulation, reducing the number of parts, while the structural layer (5) itself still maintains a basic noise attenuation in the area covered with the sole structural layer (5). For economic reasons, the binder layer (4) may not be needed in areas without the fibrous noise attenuating layer (3).

Figure 3 shows a cross section of an area where two sides meet or where single parts are combined during encapsulation of the noise source. In this case the structural layer (5) and the binder layer (4) may overlap and attach to the adjacent structure formed by the structural layer (5), the binder (4) and the fibrous noise attenuating layer (3), whereby the noise attenuating layers (3) are preferably touching side by side to prevent forming a corridor or channel for noise to escape unattenuated. In this solution the binder layer (4) may be heat activated to glue the layers together. In case other or additional means for mounting are used to combine both layers, the binder layer (4) may be omitted in the overlapping area. Alternative attachment means might be clips, straps, bugles, hoop and loop type straps or fasteners.

Figure 4 is showing a version of a encapsulating trim part (2) with heat stamped or heat set areas, whereby only locally along a fold line (8) or along an edge (9) the fibrous noise attenuating layer is compressed and thermal set to form a fold line (8) or to form a clean edge (9) and to prevent or reduce possible fraying of fibers from the fibrous noise attenuating layer. This local heat stamping prevents the noise attenuating layer (3) from springing back. Hot stamped areas can increase clearance or prevent surface contact between the fibrous noise attenuating layer and certain features of the noise source like hot surfaces. Heat stamping can also be used to close the edge (9) of an encapsulating trim part to prevent fraying of the fibres within the noise attenuating layer during mounting or may allow a smoother edge transition between and an encapsulating trim part and a neighbouring part or an uncovered area of the noise source. However, heat stamping will only be performed locally. For the overall acoustic performance of the encapsulating trim part, it is important that areas where the noise attenuating layer (3) can rebound are maintained so the contours of the noise source can be closely followed. The local hot stamping of the fibrous noise attenuating layer does not affect the function of the binder layer (4) or the structural layer (5).

## Claims

1. An encapsulating trim part comprising a moulded multilayer structure with at least a fibrous noise attenuating layer, a binding layer and a structural layer, whereby the binding layer is sandwiched between the noise attenuating layer and the structural layer, whereby the encapsulating trim part is obtainable by the process of moulding the fibrous noise attenuating layer and the binding layer both at ambient temperature together with the structural layer heated, and whereby the residual heat of the heated structural layer is enough to melt the binding layer such that the binding layer binds to fibers on the surface of the attenuating layer without further binding the fibers within the attenuating layer.

2. Encapsulating trim part accordingto claim 1, whereby the encapsulating trim part comprises one or more parts.

3. Encapsulating trim part according to one of the preceding claims, further comprising at least one area of the structural layer without the fibrous attenuating layer, for connecting the encapsulating trim part and/or bridging.

4. An encapsulating trim part according to one of the preceding claims, whereby the binding layer comprises a foil or a scrim, preferably a multilayer foil.

5. An encapsulating trim part according to one of the preceding claims whereby the binding layer comprises at least one of the following materials preferably one of a polymer or copolymer of terephthalate based polyester, such as polyethylene terephthalate PET or polybutylene terephthalate PBT, polyamide PA, such as polyamide 6 or polyamide 66, polyolefin, such as polypropylene PP or polyethylene PE, low density polyethylene LDPE or polylactic acid PLA or Ethylenevinyl acetate EVA.

6. An encapsulating trim part according to any of the preceding claims, whereby the fibrous noise attenuating layer comprises staple fibers based on preferably one of a polymer or copolymer of terephthalate based polyester, such as polyethylene terephthalate PET or polybutylene terephthalate PBT, polyamide PA, such as polyamide 6 or polyamide 66, polyolefin, such polypropylene PP or polyethylene PE, or polylactic acid PLA, or regenerated cellulose fibers or natural fibers or a mixture of such fibers.

7. An encapsulating trim part according to any of the preceding claims, whereby the fibrous attenuating layer is bonded, preferably mechanical bonded or comprising a binder.

8. An encapsulating trim part according to any of the previous claims, whereby the fibrous noise attenuating layer comprises self-crimped fibers, preferably bicomponent fibers.

9. An encapsulating trim part according to one of the preceding claims, whereby the density of the fibrous noise attenuating layer is below 100 kg/m³, more preferably below 70 kg/m³ in the moulded part.

10. An encapsulating trim part according to one of the preceding claims, whereby the density of the fibrous noise attenuating layer after moulding is increased less than 30%, preferably less than 10%.

11. An encapsulating trim part according to one of the preceding claims, whereby the fibrous noise attenuating layer is locally compressed and heat stamped to form folding lines and/or to close the edge part.

12. An encapsulating trim part according to one of the preceding claims, whereby the CV40 of the fibrous noise attenuating layer after moulding is less than 1 kPa, preferably less than 500 Pa, as measured according to ISO 3386-1.

13. An encapsulating trim part according to any of the previous claims according to one of the preceding claims whereby the structural layer is at least one of a film, a sheet, a foam, a thermoplastic elastomeric layer, a composite or a fibrous layer.

14. An encapsulating trim part according to any of the previous claims according to one of the preceding claims whereby the structural layer comprises staple fibers and or endless filaments based on preferably one of a polymer or copolymer of terephthalate based polyester, such as polyethylene terephthalate PET or polybutylene terephthalate PBT, polyamide PA, such as polyamide 6 or polyamide 66, polyolefin, such polypropylene PP or polyethylene PE, or polylactic acid PLA, or carbon fibers, mineral fibers, such as glass, aramid or basalt or natural fibers or a mixture of such fibers.

15. An encapsulating trim part according to any of the previous claims according to one of the preceding claims whereby the structural layer further comprises a binder based on a polymer or copolymer of at least one of a terephthalate-based polyester, polyolefin, polylactic acid.

16. An encapsulated noise source comprisingan encapsulating trim part according to one of the preceding claims, whereby the encapsulating trim part is mounted on or around at least part of the outer surface of noise source such that the fibrous noise attenuating layer is between the structural layer and the outer surface of the noise source, filling the gap between the structural layer and the outer surface of the noise source.

17. Use of the encapsulating trim part according to one of the claims 1 to 15 to encapsulate at least a part of a car, light commercial vehicle or truck generating and or transmitting noise, preferably encapsulating at least a part of an combustion engine, electric engine, gearing box, drive train, compressor, pump, pillar, structural panel or piping.
